# EUROPEAN PATENT APPLICATION

(11) **EP 4 336 382 A1**
(43) Date of publication of application: **13.03.2024**
(21) Application number: 22195103.1
(22) Date of filing: 12.09.2022
(51) Int. Cl.: G06F 16/84, G06F 16/25

(54) **METHOD FOR TRANSMITTING DATA FROM ONE OR MORE INDUSTRIAL DATA SOURCES**

(71) Applicant: Siemens Aktiengesellschaft, 80333 München (DE)
(72) Inventor: Petzold, Daniel, 90766 Fürth (DE)
(74) Representative: Siemens Patent Attorneys

(57) **Abstract**

The current disclosure describes a method for transmitting data from one or more industrial data sources in an industrial facility. The method comprises obtaining industrial data from the industrial data sources, translating the industrial data from a first data format to a second data format, extracting a plurality of datasets from the industrial data, wherein each data set is extracted from the industrial data according to a corresponding filter criterion from a plurality of filter criteria, and transmitting at least one dataset from the plurality of datasets in response to a query from an industrial application. Accordingly, the current disclosure describes an automated manner for preparing and transmitting data for data analysis, by translating the data into a generally accepted data exchange format and by structuring the industrial data into useable data sets suitable for data analysis, allowing for faster and cost-effective data analysis in industrial automation.

## Description

### Background:

The current disclosure relates to industrial automation systems and more particularly to data processing in industrial automation systems. Industrial automation systems often include a plurality of devices which generate industrial data in a plurality of formats. Due to the scale of the data and the numerous formats utilized, it is often difficult to utilize all the data generated by industrial devices for data analysis.

### Description:

As mentioned above, the current disclosure relates to data processing in automation environments. Currently, a very large proportion of the industrial data generated by industrial devices in automation environments remains unused as it often too difficult to sort and segregate the generated industrial data. Collection of different industrial sources such as engineering projects, control project, maintenance documentation etc., and then sorting them in contextual manner for analysis often requires considerable manual effort, and therefore is not cost effective or time effective. Accordingly, there is a need for a method and device which addresses the issue discussed above.

Accordingly, the current disclosure describes a method for transmitting data from one or more industrial data sources in an industrial facility. The method comprises obtaining industrial data from the one or more industrial data sources, wherein the industrial data is in a first data format associated with the one or more industrial data sources, translating the industrial data from the first data format to a second data format, wherein the second data format is associated with one of a mark up language and an object notation language, extracting a plurality of datasets from the industrial data, wherein each data set is extracted from the industrial data according to a corresponding filter criterion from a plurality of filter criteria, and transmitting at least one dataset from the plurality of datasets in response to a query from an industrial application. At least one filter criterion from the plurality of filter criteria includes at least one a string filter expression indicative of a predefined string.

Based on the method described above, the current disclosure addresses the problem of preparing data for data analysis. The current disclosure achieves this using two prongs. In the first prong, industrial data is translated or converted from the first format i.e., a binary, proprietary industrial format that can only be read by expensive special software, to the second format i.e., a generally accepted data exchange format (such as XML). In the second prong, the current disclosure utilizes filters to handle the segregation and sorting data sets in the industrial data. Using the filters, the current disclosure is able to automatically structure the industrial data into useable data sets suitable for data analysis, without requiring human intervention. Accordingly, the current disclosure describes an automated manner for preparing and transmitting data for data analysis, allowing for faster and cost-effective data analysis in industrial automation environments.

In an embodiment, the method further comprises providing an application programming interface (API) for receiving the query. Accordingly, the data sets are exposed for retrieval using the application programming interface over which queries for the datasets may be transmitted. This allows for easy integration of the data sets into the industrial automation environment. In an embodiment, the predefined string is associated with one of a data value, data source, and a data tag. Accordingly, the filters may be set to generate data sets based on the name or description associated with the data value, data source or the data tag. In an embodiment, the second data format is based on extensible mark up language (XML). Accordingly, the data sets may be used by any application which is capable of utilizing XML format.

In an embodiment, the one or more industrial data sources includes one or more industrial controllers, gateway devices, historians and engineering data repositories. In an embodiment, the extracted plurality of datasets are stored in a data store. The data store is accessible via the application programming interface. Accordingly, the industrial data sets are available for a considerable amount of time subsequent to the generation.

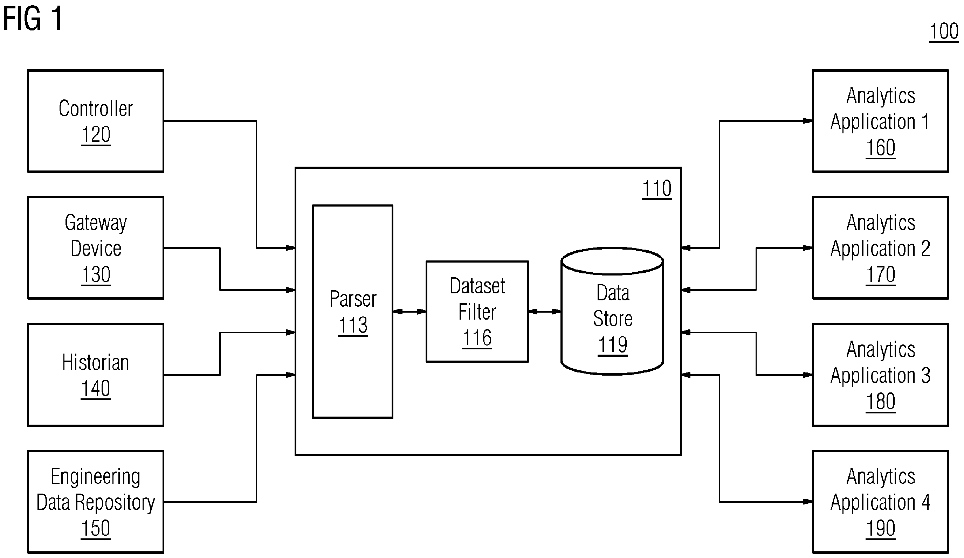

In another aspect, the current disclosure describes a device for transmitting data from one or more industrial data sources in an industrial facility. The device comprises one or more processors connected to a memory module. The one or more processors are configured to obtain industrial data from the one or more industrial data sources wherein the industrial data is in a first data format associated with the one or more industrial data sources; translate the industrial data from the first data format to a second data format, wherein the second data format is associated with one of an mark-up language and an object notation language; extract a plurality of datasets from the industrial data, wherein each data set is extracted from the industrial data according to a corresponding filter criterion from a plurality of filter criteria; and transmit at least one dataset from the plurality of datasets in response to a query from an industrial application. At least one filter criterion from the plurality of filter criteria includes at least one string filter expression indicative of a predefined string. In yet another aspect, the current disclosure describes a non transitory storage medium comprising a plurality of instructions which when executed on one or more processors, cause the one or more processors to obtain industrial data from the one or more industrial data sources, wherein the industrial data is in a first data format associated with the one or more industrial data sources; translate the industrial data from the first data format to a second data format, wherein the second data format is associated with one of an mark-up language and an object notation language; extract a plurality of datasets from the industrial data, wherein each data set is extracted from the industrial data according to a corresponding filter criterion from a plurality of filter criteria; and transmit at least one dataset from the plurality of datasets in response to a query from an industrial application. The advantages mentioned in relation to the method apply to the device and the non-transitory storage medium as well. These aspects are further explained in reference to figures 1-3.
Figure 1 illustrates a section 100 of an industrial facility comprising a data collection device;
Figure 2 illustrates a method for transmitting data from one or more industrial data sources in an industrial facility; and
Figure 3 illustrates a data collection device for transmitting data from one or more industrial data sources in an industrial facility.

Figure 1 illustrates a section 100 of an industrial facility comprising a data collection device 110. Industrial facility herein refers to any environment where one or more industrial processes such as manufacturing, refining, smelting, assembly of equipment, etc., may take place. Examples of industrial facility includes process plants, oil refineries, automobile factories, etc. The industrial automation system includes a plurality of industrial devices such as control devices (process controllers, programmable logic controllers, supervisory controllers, operator devices, etc.,), field devices, etc. The controllers (shown in figure as controller 120) are connected directly or via a plurality of peripheral or interface devices, to a plurality of field devices such as actuators and sensor devices for monitoring and controlling industrial processes in the industrial facility. These field devices can include flowmeters, value actuators, temperature sensors, pressure sensors, etc. Based on the process values, the controllers generate control commands for the actuators, for control and regulation of industrial processes in the industrial facility.

The industrial facility further comprises one or more gateway devices (shown in figure as gateway device 130) which are responsible for transmitting industrial data from the field devices to other systems such as cloud analytic systems, enterprise resource planning (ERP) systems, manufacturing execution systems (MES), etc. In addition to the abovementioned devices, the industrial facility comprises a plurality of historians and data repositories (shown in the figure as historian 140 and engineering data repository 150) for storing data related to the processes carried out in the industrial facility. For example, the industrial facility includes a historian 140 which is configured to store process data from the industrial devices (such as control devices and field devices) .

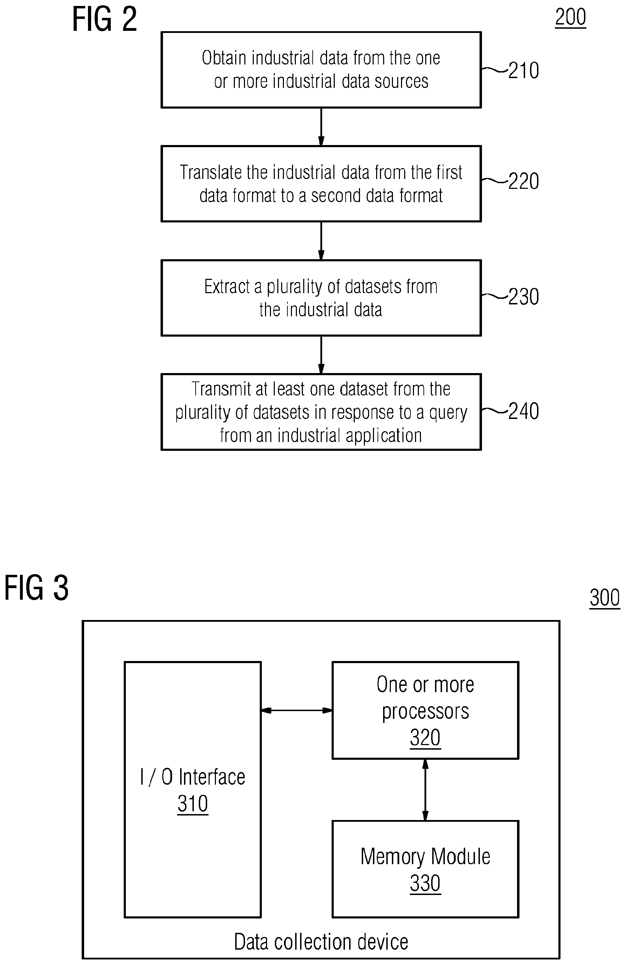

Additionally, the industrial facility includes a data collection device 110 for collecting industrial data from the industrial devices, translating the industrial device from industrial formats to a generally accepted data format, and segmenting the industrial data into one or more meaningful data sets which may transmitted to one or more data analytics applications (shown in the figure 1 as analytics applications 160, 170, 180, 190). This is further explained in reference to figure 2.

Figure 2 illustrates a method 200 for transmitting data from one or more industrial data sources (120, 130, 140, 150) in an industrial facility. In an example, the method 200 is executed by the data collection device 110.

At step 210, the data collection device 110 obtains industrial data from the one or more industrial data sources (120, 130, 140, 150). The one or more industrial data sources (120, 130, 140, 150) includes one or more industrial controllers (120), gateway devices (130), historians (140) and engineering data repositories (150). The industrial data is associated with a process in the industrial facility. For example, the industrial data includes process values of a process regulated by the controller 121. The industrial data is in a first data format associated with the one or more industrial data sources. For example, the industrial data is in a first industrial proprietary format (S7 protocol) associated with the industrial controller 120.

Then, at step 220 the data collection device 110 translates the industrial data from the first data format to a second data format. The data collection device 110 includes a plurality of protocol converters, wherein each protocol converter is associated with a corresponding industrial data format and is configured to translate data from the corresponding industrial data format to the second data format. The industrial data formats may include Profinet, OPC UA, S7, EDI, etc. The second data format is a generally accepted data format which is commonly utilized in the IT environment. Accordingly, the second data format is associated with one of a mark up language and an object notation language. For example, the second data format is based on Extensible Mark up Language (XML) or Javascript Object Notation (JSON). It may be noted by a person skilled in the art that such protocol converters are well known in the state of the art and accordingly may be realized by a person skilled in the art.

Then, at step 230, the data collection device 110 extracts a plurality of datasets from the industrial data, wherein each data set is extracted from the industrial data according to a corresponding filter criterion from a plurality of filter criteria. Each filter includes one or more string filter expressions. Each string filter expression specifies one or more predefined text characters. For example, the string filter expression may refer to a name of a particular dashboard element, a name of the historian, name of a tag, etc. Additionally, each filter may define the data to be extracted in relation to the string matching a corresponding predefined string filter expression. Whenever, at least one string filter expression is matched, parts of the data around the matching data is extracted as a dataset. Accordingly, by applying the plurality of filter criteria, a plurality of datasets in accordance with the filter criteria is extracted. This is further illustrated with regards to an example mentioned below.

In an example, the industrial data includes dashboard visualization data from an HMI server. The dashboard visualization data includes a plurality of data fields (also treated as data attributes or properties in the second data format). Each data field may accordingly include a corresponding text value, numerical value, alphanumeric value or binary value. One of the data fields is a field associated with a name which contains the text value indicative of the name of the HMI server (for example 'HMI server 1'). When the data collection applies a corresponding filter containing the string filter expression 'HMI server *' (the asterisk indicative of any text character in that position), the name data field is matched in accordance with the string filter expression. The filter additionally defines the data fields to be extracted when the string filter expression is matched. For example, the filter defines that that first five fields and their values subsequent to the name field, should be extracted as a dataset. While the current example is explained using a single filter and a single dataset, a plurality of datasets may be extracted using the plurality of filter criteria.

In an example, subsequent to the extraction of the data sets, the data sets are are stored in a data store 119 in the data collection device. The data store 119 may be accessed via the application programming interface made available by the data collection device 110.

Finally, at step 240, the data collection device 110 transmits at least one dataset from the plurality of datasets in response to a query from an industrial application (160). In an embodiment, the query for the dataset is received via the application programming interface (API). Accordingly, using the data collection device, the current disclosure addresses the problem of preparing data for data analysis. The data collection device in accordance with method 200 is able to translate the industrial data from industrial formats to a generally accepted exchange format and then segment the monolithic industrial data in specific data sets using the filters. Accordingly, the data collection device is able to automatically structure the industrial data into useable data sets suitable for data analysis, without requiring human intervention.

It may be noted that while the above-mentioned method is explained in reference to the data collection device 110, the above method may be realized using one or more devices or via one or more software modules. Accordingly, the current disclosure describes a data collection device which is further described in relation to figure 3.

In this regard, the current disclosure describes a data collection device 300 for transmitting data from one or more industrial data sources (120, 130, 140, 150) in an industrial facility. The device comprises one or more processors 320 connected to a memory module 330. The memory module 330 (also referred to as non-transitory storage medium 330) includes a plurality of instructions which are to be executed on the one or more processors 320. The one or more processors 320, upon execution of the stored instructions, are configured to obtain industrial data from the one or more industrial data sources (120, 130, 140 ,150), wherein the industrial data is in a first data format associated with the one or more industrial data sources (129,130,140, 150); translate the industrial data from the first data format to a second data format, wherein the second data format is associated with one of a mark-up language and an object notation language; extract a plurality of datasets from the industrial data, wherein each data set is extracted from the industrial data according to a corresponding filter criterion from a plurality of filter criteria; and transmit at least one dataset from the plurality of datasets in response to a query from an industrial application (160). At least one filter criterion from the plurality of filter criteria includes at least one string filter expression indicative of a predefined string.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non-transitory storage medium claims.

## Claims

1. A method (200) for transmitting data from one or more industrial data sources (120, 130, 140, 150) in an industrial facility, the method (200) comprising:
a. obtaining (210) industrial data from the one or more industrial data sources (120, 130, 140, 150), wherein the industrial data is in a first data format associated with the one or more industrial data sources (120, 130, 140, 150);
b. translating (220) the industrial data from the first data format to a second data format, wherein the second data format is associated with one of a mark up language and an object notation language;
c. extracting (230) a plurality of datasets from the industrial data, wherein each data set is extracted from the industrial data according to a corresponding filter criterion from a plurality of filter criteria; and
d. transmitting (240) at least one dataset from the plurality of datasets in response to a query from an industrial application (160),
wherein at least one filter criterion from the plurality of filter criteria includes at least one string filter expression indicative of a predefined string.

2. The method (200) as claimed in claim 1, wherein the method further comprises providing an application programming interface (API) for receiving the query.

3. The method (200) as claimed in claim 1, wherein the predefined string is associated with one of a data value, data source, and a data tag.

4. The method (200) as claimed in claim 1, wherein the second data format is based on extensible mark up language.

5. The method (200) as claimed in claim 1, wherein the one or more industrial data sources (120, 130, 140, 150) includes one or more industrial controllers (120), gateway devices (130), historians (140) and engineering data repositories (150).

6. The method (200) as claimed in claim 1, wherein extracting the plurality of datasets

7. The method (200) as claimed in claim 2, wherein the extracted plurality of datasets are stored in a data store (119) and wherein the data store (119) is accessible via the application programming interface.

8. A device (300) for transmitting data from one or more industrial data sources (120, 130, 140, 150) in an industrial facility, the device comprising:
a. One or more processors (320) connected to a memory module (330), wherein the one or more processors (320) are configured to
b. obtain industrial data from the one or more industrial data sources (120, 130, 140 ,150), wherein the industrial data is in a first data format associated with the one or more industrial data sources (129,130,140, 150);
c. translate the industrial data from the first data format to a second data format, wherein the second data format is associated with one of a mark-up language and an object notation language;
d. extract a plurality of datasets from the industrial data, wherein each data set is extracted from the industrial data according to a corresponding filter criterion from a plurality of filter criteria; and
e. transmit at least one dataset from the plurality of datasets in response to a query from an industrial application (160),
wherein at least one filter criterion from the plurality of filter criteria includes at least one string filter expression indicative of a predefined string.

9. A non-transitory storage medium (330) comprising a plurality of instructions which when executed on one or more processors (320), cause the one or more processors (320) to:
a. obtain industrial data from the one or more industrial data sources (120,130,140,150), wherein the industrial data is in a first data format associated with the one or more industrial data sources (120,130,140,150) ;
b. translate the industrial data from the first data format to a second data format, wherein the second data format is associated with one of a mark-up language and an object notation language;
c. extract a plurality of datasets from the industrial data, wherein each data set is extracted from the industrial data according to a corresponding filter criterion from a plurality of filter criteria; and
d. transmit at least one dataset from the plurality of datasets in response to a query from an industrial application (160),
wherein at least one filter criterion from the plurality of filter criteria includes at least one string filter expression indicative of a predefined string.
